(19) Europäisches Patentamt
European Patent Office
Office européen des brevets

(11) Publication number: 0 365 428 B1

(12) **EUROPEAN PATENT SPECIFICATION**

(45) Date of publication of patent specification: **16.02.94**

(51) Int. Cl.5: **C09D 5/03**, C08G 59/24, C09D 163/00, C09D 167/00

(21) Application number: **89402884.4**

(22) Date of filing: **18.10.89**

# (54) A powder coating composition.

(30) Priority: **18.10.88 JP 262129/88**
**14.09.89 JP 239287/89**

(43) Date of publication of application:
**25.04.90 Bulletin 90/17**

(45) Publication of the grant of the patent:
**16.02.94 Bulletin 94/07**

(84) Designated Contracting States:
**CH DE FR GB IT LI**

(56) References cited:

**PATENT ABSTRACTS OF JAPAN, vol. 12, no. 283 (C-518)[3130], 03 August 1988; & JP-A-63 61 044**

**CHEMICAL PATENTS INDEX, BASIC ABSTRACTS JOURNAL, Section A, week 8642, 10 December 1986, A0400, no. 86-275225/42, Derwent Publications Ltd, London; GB; & JP-A-61 200 177**

(73) Proprietor: **DAICEL CHEMICAL INDUSTRIES, LTD.**
**No. 1-Banchi, Teppo-cho**
**Sakai-shi Osaka-fu 590(JP)**

(72) Inventor: **Murai, Takaaki**
**13-5 Kuba 4-chome**
**Otake Hiroshima(JP)**
Inventor: **Sakai, Katsuhisa**
**8-5 Kuba 6-chome**
**Otake Hiroshima(JP)**

(74) Representative: **Portal, Gérard et al**
**Cabinet Beau de Loménie**
**158, rue de l'Université**
**F-75340 Paris Cédex 07 (FR)**

EP 0 365 428 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

The present invention relates to a powder coating composition which comprises a mixture consisting essentially of a polyester resin and an alicyclic solid epoxy resin.

The powder coating composition has excellent properties including excellent smoothness on the surface, resistance to heat, and good outdoor durability of the coated layer formed after curing, in the class of polyester type coatings.

### BACKGROUND OF THE INVENTION

For more than ten years, powder coating compositions have been widely used in many fields, because, e.g., of the following excellent properties:

(a) it does not contain any solvents, therefore, it has an advantage of presenting less physiological hazards and environmental pollution hazards, and avoiding the risk of fire;

(b) it requires only reasonable costs, because as mentioned above, solvents are not used, and because excess parts of a powder coating composition which is not fixed onto the substrate to be coated at the time of application can be recovered completely;

(c) it has a capability of being used to form thick coating layers of up to 100 microns, which cannot be achieved with paints or varnishes having solvents;

(d) its coated and cured layer does not tend to soften even when exposed to an elevated temperature atmosphere; and

(e) it has a characteristic of better adhesion to metal substrates.

A polyester type powder coating by use of a carboxyl terminated polyester resin having at least 2 carboxylic groups in a molecule has been widely used because of various kinds of excellent properties, such as ductility of the coating layer, surface hardness of the coating layer, etc., in addition to the above-described (a) to (e). They can be attained by adjusting the molecular weight and by appropriate selection of a combination of a polycarboxylic acid(s) and a polyhydric alcohol(s), said polyester resin can be readily prepared by an esterification reaction between (n + 1) mole of a polycarboxylic acid(s) and n mole of a polyhydric alcohol(s).

A polyester resin having carboxyl groups in terminal positions usually reacts with an epoxy resin to form a cured coating layer as described hereinafter.

Namely, carboxyl groups in terminal positions and epoxy groups react and cure by heating at the presence of catalyst, resulting in formation of tough coating layer.

So-called epi-bis type epoxy resins produced by a reaction between bisphenol A and epichlorophydrine, novolak type epoxy resins produced by a reaction between a novolak phenol resin and epichlorohydrine and the like have been used in the above-described curing reaction with a polyester resin.

However, the above-described epoxy resin cannot give sufficient resistance to heat and good outdoor durability to the coated layer made from a corresponding powder coating composition.

In recent years, triglycidyl isocyanurate has been used because a powder coating composition prepared with it can form a layer having excellent resistance to heat, good outdoor durability, and also smoothness on the surface of coating layer.

However, triglycidyl isocyanurate has a human toxicity.

Furthermore, there has increasingly been required highly advantageous properties according to the extension of uses of powder coating compositions in various fields.

As a result of extensive investigations noting such a background, the inventors of this invention found that it is possible to solve problems pointed out as hereinabove by using a mixture of a polyester resin and an alicyclic solid epoxy resin which has oxycyclohexane units, which had been disclosed in the Japanese Patent Application Publication (Kokai) No. 166675/1985, corresponding to U.S. Patent 4,565,859.

### SUMMARY OF THE INVENTION

It is an object of the present invention to provide a powder coating composition which has properties of an excellent smoothness on the surface of coating layer, resistance to heat, and good outdoor durability of the coated layer formed after curing.

The powder coating composition of the present invention comprises a mixture consisting essentially of (a) a carboxyl terminated polyester resin having at least two carboxylic groups per molecule and (b) an

alicyclic epoxy resin represented by formula (I):

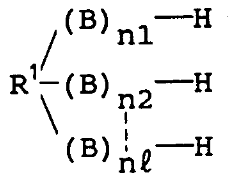

(I)

in which $R^1$ represents a residual group of an organic compound having ℓ active hydrogen atoms, n1 through nℓ each represents 0 or an integer of from 1 to 100, the sum of integers represented by n1 through nℓ is from 1 to 100, and ℓ represents an integer of from 1 to 100, and B represents an oxycyclohexane unit having substituent X:

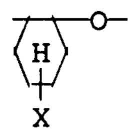

wherein substituent X represents a

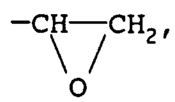

$-CH=CH_2$, and

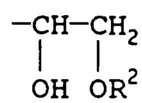

group

wherein $R^2$ represents a hydrogen atom, an alkyl group, an alkyl carbonyl group, an aryl carbonyl group, provided that the epoxy resin represented by formula (I) contains at least one

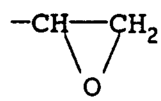

group

According to an optional preferred embodiment of the invention, the composition also includes (c) a curing catalyst.

The powder coating composition of the present invention can be applied to various fields such as domestic electric appliances, automobile accessories, furniture, and the like due to the excellent properties described hereinabove.

## DETAILED DESCRIPTION OF THE INVENTION

The present invention is described hereinafter in more detail.

The present powder coating composition comprises two essential components of resins.

The first essential component in the powder coating composition of the present invention is a carboxyl terminated polyester resin having at least two carboxylic groups per molecule, which can be produced by an esterification reaction of a polycarboxylic acid or an anhydride thereof with a polyhydric alcohol.

The process for producing the carboxyl terminated polyester resin to be used in the present invention is described hereinafter.

A polyhydric alcohol and a polycarboxylic acid or an anhydride thereof are charged in a reactor.

When the mole number of the polyhydric alcohol is n, the polycarboxylic acid or hydride thereof is added in an amount of (n + 1) mole number to obtain a carboxyl terminated polyester resin.

The polyester resin can be synthesized according to the following reaction scheme:

$$(n+1)HOOC{-}R{-}COOH + nHO{-}R'{-}OH \xrightarrow[\text{heat}]{\text{catalyst}} HO{-}(CO{-}R{-}COO{-}R'{-}O)_nCO{-}R{-}COOH + 2nH_2O$$

An appropriate reaction temperature is from 100 to 230 ° C.

Removal of water provides the ester compound.

This reaction may proceed in the absence of any catalyst, but a catalyst conventionally used for esterification reaction may also be used.

The examples of a catalyst include sulfuric acid, p-toluene sulfonic acid, titanium compounds such as tetrabutyl titanate, and the like.

The examples of a polycarboxylic acid or an anhydride thereof include isophthalic acid, terephthalic acid, cyclohexane dicarboxylic acid, succinic acid, glutaric acid, adipic acid, pimelic acid, suberic acid, azelaic acid, maleic acid, sebasic acid, fumaric acid, dodecanoic acid, hexahydrophthalic acid, methylhydrophthalic acid, tetrahydrophthalic acid, methyltetrahydrophthalic acid, an anhydride of an aliphatic tricarboxylic acid such as 1,2,3-propane tricarboxylic acid, an anhydride of an aromatic tricarboxylic acid such as trimellitic acid or hemimellitic acid, and/or an anhydride of alicyclic tricarboxylic acid such as 6-methylcyclohexe-4-en-1,2,3-tricarboxylic acid, pyromellitic di-anhydride or benzophenon-3,3′, 4,4′-tetracarboxylic dianhydride.

It is possible to use either one kind of a polycarboxylic acid or anhydride thereof or a mixture composed of two or more kinds thereof.

The examples of a polyhydric alcohol include ethylene glycol, propylene glycol, 1,4-butanediol, 1,3-butylene glycol, 1,4-butylene glycol, 2-methylpropanediol, 1,6-hexanediol, 1,2-dodecane diol, neopentyl glycol, cyclohexanediol, glycerine, trimethylolpropane, pentaerythritol, and/or dipentaerythritol, neopentyl glycol hydroxy pivalate, 1,4-cyclohexanedimethanol, an ethylene oxide adduct of bisphenol A, 1,4-hydroxyquinone and the like.

It is possible to use either one kind of a polyhydric alcohol, or a mixture composed of two or more kinds thereof.

A polyester resin to be used in the present invention should essentially include at least two carboxylic groups per molecule; in the case of less than two, crosslinked structures cannot be formed in a coating layer.

The acid value of the carboxyl terminated polyester resin having at least two carboxylic groups in a molecule is preferably in the range of from 15 to 100.

When the acid value is less than 15, reactivity of the polyester resin is low and amount of crosslinked structures does not increase.

On the other hand, if the acid value is larger than 100, the molecular weight of the polyester resin is lower, and a solid polyester cannot be obtained. Also, in the case that the equivalent of epoxy resin is mixed with the polyester resin, the content of the polyester resin is meaninglessly lower.

It is also noted that a larger acid value corresponds to lower molecular weight, whereas a smaller acid value corresponds to higher molecular weight.

Preferable polyester resin to be used is solid at room temperatures, with a glass transition temperature in the range of from 40 to 80 ° C.

The other essential component in the powder coating composition of the present invention is an alicyclic epoxy resin having one ether bond and three kinds of substituents.

The alicyclic epoxy resin is represented by formula (I):

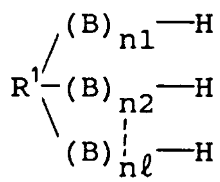

(I)

B represents oxycyclohexane unit having substituent X:

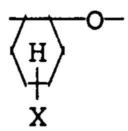

In the alicyclic epoxy resin represented by formula (I) in the present invention, $R^1$ is a residual group of an organic compound having at least one active hydrogen atom.

The organic compounds having at least one active hydrogen atom which are precursors of the residual group include alcohols, phenols, carboxylic acid, amines and thiols.

As alcohols, either monohydric alcohols or polyhydric alcohols may be used.

For instance, aliphatic alcohols such as methanol, ethanol, propanol, butanol, pentanol, hexanol, octanol; aromatic alcohols such as benzyl alcohol; polyhydric alcohols such as ethylene glycol, diethylene glycol, triethylene glycol, polyethylene glycol, propylene glycol, dipropylene glycol, 1,3-butanediol, 1,4-butanediol, pentanediol, 1,6-hexanediol, neopentyl glycol, neopentyl glycol oxypivalate, cyclohexanedimethanol, glycerine, diglycerine, polyglycerine, trimethirolpropane, trimethirol ethane, pentaerythritol, dipentaerythritol, etc., are included.

Phenols include phenol, cresol, catecol, pyrogallol, hydroquinone, hydroquinone monomethylether, bisphenol A, bisphenol F, 4,4′-dihydroxybenzophenone, bisphenol S, phenol resins, cresol novolak resins, etc.

Carboxylic acids include formic acid, acetic acid, propionic acid, butyric acid, fatty acid of animal and vegetable oil and fats, fumaric acid, maleic acid, adipic acid, dodecanedioic acid, trimellitic acid, pyromellitic acid, polyacrylic acid, phthalic acid, isophthalic acid, terephthalic acid, etc.

In addition, compounds having a hydroxyl group together with a carboxylic acid group such as lactic acid, citric acid, oxycaproic acid, etc., are included.

Amines include methylamine, ethylamine, propylamine, butylamine, pentylamine, hexylamine, cyclohexylamine, octylamine, dodecylamine, 4,4′-diaminodiphenylmethane,isophorondiamine, toluenediamine, hexamethylene diamine, xylene diamine, diethylene triamine, triethylene tetramine, ethanolamine, etc.

Thiols include mercaptans such as methyl mercaptan, ethyl mercaptan, propyl mercaptan, phenylmercaptan, etc., mercaptopropioic acid or polyhydric alcohol esters of mercaptopropioic acid, such as ethylene glycol bismercapto propionate, trimethylolpropane trimercapto propionate, pentaerythritol pentamercaptopropioic acid, etc.

Furthermore, other compounds having active hydrogen atoms include polyvinyl alcohol, partially hydrolyzed products of polyvinyl acetate, starch, cellulose, cellulose acetate, cellulose acetate butylate, hydroxyethyl cellulose, acrylic polyol resins, styrene-allyl alcohol copolymer resins, styrene-maleic acid copolymer resins, alkyd resins, polyester polyol resins, polyester carboxylic acid resins, polycaprolactone polyol resins, polypropylene polyol, polytetramethylene glycol, etc.

The compounds having at least one active hydrogen atom may have an unsaturated double bond in their structure, examples of which include allyl alcohol, acrylic acid, methacrylic acid, 3-cyclohexenemethanol, tetrahydrophthalic acid, etc.

The unsaturated double bond in epoxy resins represented by formula (I) may have a structure that is partially or completely expoidated.

n1, n2 through $n\ell$ in formula (I) each represents 0 or an integer of from 1 to 100, and the sum of the integers is from 1 to 100.

If it is more than 100, resins having a high softening point are obtained which cannot be used practically.

$\ell$ represents an integer of from 1 to 100.

It is essential that the substituents X in the formula (I) contain at least one $-CH-CH_2$, but it is more desirable that the number of $-CH-CH_2$ groups is greater, and especially the number of

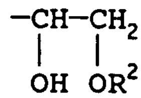

is smaller.

It is preferred that the greater part of the substituents X in the present invention comprises

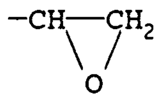

groups.

Wherein $R^2$ represents a hydrogen atom, an alkyl group, an alkyl carbonyl group, an aryl carbonyl group, provided that the epoxy resin represented by formula (I) contains at least one

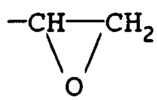

group, in formula (I).

The epoxy resin used in the present invention represented by formula (I) can be produced by epoxidizing a polyether compound with an oxidation agent such as peracid.

The polyether compound, which has a vinyl group as a side chain, can be obtained by ring-opening polymerization of 4-vinylcyclohexene-1-oxide with an organic compound described hereinabove having at least one active hydrogen atom as an initiator.

The polyether compound corresponds to a compound in case that the above-described substituent X is only $-CH=CH_2$.

4-Vinylcyclohexene-1-oxide is represented by the following formula.

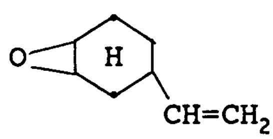

4-Vinylcyclohexene-1-oxide is reacted with an organic compound having at least one active hydrogen atom, preferably in the presence of catalyst.

Catalysts include amines such as methylamine, ethylamine, propylamine, piperazine, and the like; organic bases such as pyrizines, imidazoles, and the like; organic acids such as quaternary ammonium salts such as tetrabutyl ammonium bromide, and the like; formic acid, acetic acid, propionic acid and the like; inorganic acids such as sulfuric acid, hydrochloric acid, and the like; alcoholates of alkali metals such as sodium methylate and the like; alkalis such as KOH, NaOH, and the like; Lewis acids such as $BF_3$, $Znc\ell_2$, $A\ell C\ell_3$, $SnC\ell_4$, and the like; or complex compounds of the Lewis acids, and organometallic compounds such as triethyl aluminum, diethyl zinc, and the like.

These catalysts are used in a concentration of from 0.01 to 10% by weight, and preferably from 0.1 to 5%, based on the weight of the starting materials forming the mixture.

The reaction can be carried out at the temperature of from -20 to 200 °C, preferably from 0 to 100 °C. The reaction can be also carried out in the presence of solvent.

A solvent having active hydrogen atoms cannot be used, e.g., ketones such as acetone, methyl ethyl ketone, methyl isobutyl ketone, and the like. On the other hand, aromatic solvents such as benzene,

toluene, xylene, and the like and ethers, aliphatic hydrocarbons, and esters can be used.

The epoxy resin represented by formula (I) can be produced by epoxidizing the polyether compound with epoxidizing agent.

As epoxidizing agents, peracids and hydroperoxides can be used.

As peracid, performic acid, peracetic acid, perbenzoic acid, trifluoroperacetic acid, etc., can be used.

Of these, peracetic acid is a preferable epoxidizing agent because it is available industrially at a moderate price and has high stability.

As hydroperoxides, hydrogen peroxide, tertiary butyl hydroperoxides, cumen peroxide, etc., can be used.

In carrying out epoxidizing process, catalyst can be optionally used.

In the case of peracids, for example, alkalis such as sodium carbonate, etc., acids such as sulfuric acid, etc., can be used as a catalyst.

In the case of hydroperoxides, it is possible to obtain a catalytic effect, for example, by using a mixture of tungstic acid and sodium hydroxide together with hydrogen peroxide, or hexacarbonylmolybdenum together with tertiary butyl hydroperoxides.

The epoxidizing reaction is carried out in the absence or presence of a solvent, controlling the reaction temperature according to the apparatus used and the properties of raw materials.

The temperature region of the epoxidizing reaction is selected according to the reactivity of the epoxidizing agent.

In the case of peracetic acid, which is a preferable epoxidizing agent, a preferable temperature region is from 0 to 70 °C.

In the case of under 0 °C, the reaction velocity is slow, on the other hand, in the case of over 70 °C, a decomposition reaction of the peracetic acid occurs.

In the case of tertiary butyl hydroperoxidemolybdenum dioxide diacetyl acetate, which is an example of hydroperoxide, preferable temperature region is from 20 to 150 °C based on the same considerations.

The use of solvents for dilution is effective in view of decreasing the viscosity of raw materials and stabilization of epoxidizing agent. In the case of peracetic acid as epoxidizing agents, a preferable solvent is an aromatic compound, ether compounds, ester compounds, ketone compounds, etc.

The molar ratio of epoxidizing agent to be used to unsaturated bonds can be selected according to the amount of the unsaturated bonds to be retained.

In the case of preparing epoxy compounds having many epoxy groups, an equal or higher molar ratio of epoxidizing agents to the unsaturated bonds is preferably used.

However, using amounts of epoxidizing agents at a molar ratio of more than 2/1 with respect to the unsaturated bonds are not preferable because of costs and the side reaction described below.

In the case of peracetic acid, a ratio of from 1/1 to 1.5/1 is preferable.

The substituent in the raw material, i.e.,

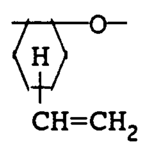

,

and substituent in the products

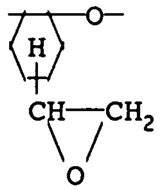

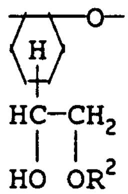

,

which are produced as a result of side reactions with the epoxidizing agent, are produced in the desired product according to the condition of epoxidizing reaction.

The relative amounts of the three kinds of substituents in the desired products depend on the kind of epoxidizing agent, molar ratio of the epoxidizing agent to unsaturated bonds, and reaction conditions.

In the case that peracetic acid is used as epoxidizing agent, the substituents by side reactions are composed of the units

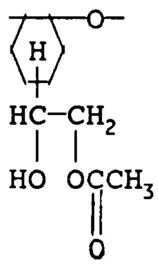

,

which are produced by a reaction between epoxy groups and acetic acid by-product.

The desired compound can be separated from the crude reaction solution by conventional chemical engineering means, such as concentration.

The mixing ratio of functional epoxy groups to carboxyl groups is preferably in the range of from 0.5/1 to 1.5/1 based on a chemical equivalent basis.

If it is more than 1.5/1, the residual epoxy groups after curing are relatively rich.

On the other hand, if the mixing ratio is less than 0.5/1, and then the residual carboxylic groups after curing are relatively rich.

Neither of these cases are preferable, because of formation of thermally and optically unstable coating layers.

Also, in the case of mixing, a curing catalyst can be optionally mixed.

Any catalyst can be used in the case of the curing catalyst as can be used as a catalyst for curing epoxy resin with acid.

Examples of curing catalysts include tertiary amines, imidazoles, and the like; organic bases such as phosphines, quaternary ammonium salts such as tertrabutyl ammonium bromide, and the like; Lewis acids such as $BF_3$, $ZnC\ell_2$, $A\ell C\ell_4$, $SnC\ell_4$, and the like; and organo metallic compounds such as triethylaluminium, diethyl zinc, and the like.

These catalysts are preferably used in a range of not more than 10 parts by weight, and more preferably of not more than 5 parts by weight, based on 100 parts by weight of the powder resin composition.

If the composition contains not less than 10 parts by weight of the curing catalyst, it is not preferable because of adverse effects on the properties of the resulting coated layer.

The curing catalyst can be mixed either at the same time of mixing of the resins or immediately before use.

The curing catalyst is not necessarily an essential component at coating process.

The polyester resin and the epoxy resin and optional adding auxiliary substances conventionally used in the manufacture of powder paints or varnishes are mixed, followed by kneading, at a temperature of from 80 ° C to 120 ° C with a melting kneader such as a heated mixing roll or an extruder, followed by cooling after kneading sufficiently, and then crushing with a crusher to obtain a powder composition having a particle size which is between 0.1 and 250 microns, and preferably from 10 to 75 microns.

Examples of the adding auxiliary substances include pigments, flow control agents, an agent for preventing blocking, ultraviolet ray absorber, antioxidant agent, and/or antistatic agent and levelling agents, deaerating agents such as benzoin and the like, which can be optionally mixed into the powder coating composition of the present invention.

A carboxyl terminated polyester resin having at least 2 carboxylic groups in a molecule (for example, in the case of a polyester resin synthesized by an esterification reaction of a dicarboxylic acid with a divalent alcohol) and the epoxy groups in the alicyclic epoxy resin react in the presence of curing catalyst and on heating at a temperature of approximately from 150 to 250 ° C as described hereinafter.

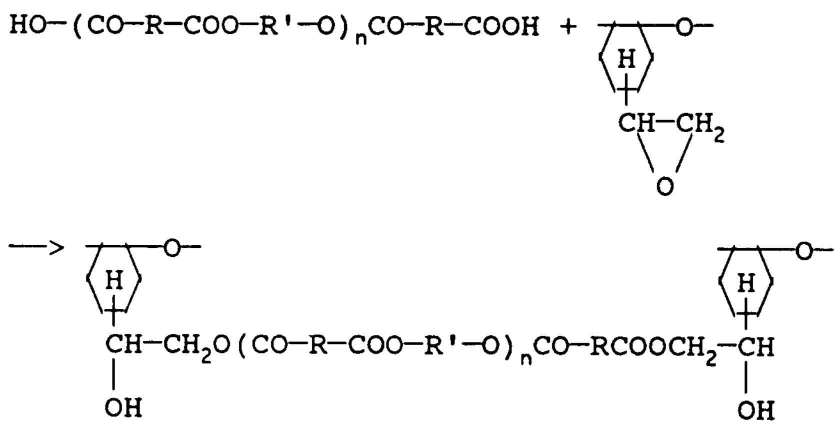

In the foregoing, R is a residual group of a dicarboxylic acid and R′ is a residual group of a divalent alcohol.

The present powder coating composition can be coated onto substrates, and particularly desirably onto metal articles charged with electrostatic electricity, by use of a fluidized bed coating technique or by use of an electrostatic spray gun and the like.

In the following, the present invention will be illustrated by examples and comparative examples.

Synthesis Example 1

(Synthesis of a carboxyl terminated polyester resin having at least 2 carboxylic groups in a molecule)

In a four-necked flask equipped with a stirrer, a thermometer, a nitrogen gas introducing tube and a condenser with a water removal tube, 2,382 parts of diethylene glycol, 4,037 parts of cyclohexane dicarboxylic acid, and 0.07 part of tetrabutyltitanate were charged.

Dehydration started at 140 ° C.

As the dehydration proceeded, the temperature increased to 220 ° C.

The reaction was carried out until the amount of water removed reached 805 parts.

Thus, polyester showing an acid value (KOH mg/g) of 20 was obtained.

The polyester resin obtained was designated as P-1.

Synthesis Example 2

In a four-necked flask equipped with a stirrer, a thermometer, a nitrogen gas introducing tube, and a condenser with a water removal tube, 954 parts of diethylene glycol, 1,392 parts of adipic acid and 0.002 part of tetrabutyltitanate were charged.

Dehydration started at 140 ° C.

As the dehydration proceeded, the temperature increased to 220 ° C.

The reaction was carried out until the amount of water removed reached 328 parts.

Thus, polyester showing an acid value (KOH mg/g) of 23.8 and an average molecular weight (calculated as polystyrene) $M_N$ = 6,900 was obtained.

The polyester resin obtained was designated as P-2.

Synthesis Example 3

In a four-necked flask equipped with a stirrer, a thermometer, a nitrogen gas introducing tube and a condenser with a water removal tube, 2,080 parts of neopentyl glycol, 3,066 parts of adipic acid, and 0.05 part of tetrabutyl titanate were charged. Dehydration started at 140 °C.

As the dehydration proceeded, the temperature increased to 220 °C.

The reaction was carried out until the amount of water removed reached 720 parts.

Thus, polyester showing an acid value (KOH mg/g) of 34.6 and an average molecular weight (calculated as polystyrene) $M_N$ = 3,730, $M_W$ = 7,560 and $M_W/M_N$ = 2.03 was obtained.

The polyester resin obtained was designated as P-3.

Synthesis Example 4

Synthesis Example 1 was repeated except that the 2,382 parts of diethylene glycol was replaced with 900 parts of 1,4-butylene glycol, the 4,037 parts of cyclohexane dicarboxylic acid was replaced with 1,826 parts of isophthalic acid, and 0.02 part of tetrabutyltitanate was used.

The reaction was carried out until the amount of water removed reached 180 parts.

Thus, polyester showing an acid value (KOH mg/g) of 62.8 and an average molecular weight (calculated as polystyrene) $M_N$ = 2,080, $M_W$ = 4,540 and $M_N/M_W$ = 2.18 was obtained.

The polyester resin obtained was designated as P-4.

Synthesis Example 5

Synthesis Example 1 was repeated except that the 2,382 parts of diethylene glycol was replaced with 767 parts of 1,6-hexanediol, the 4,037 parts of cyclohexane dicarboxylic acid was replaced with 1,095 parts of adipic acid, 0.002 part of tetrabutyltitanate was used.

The reaction was carried out until the amount of water removed reached 234 parts.

Thus, polyester showing an acid value (KOH mg/g) of 70.2 and an average molecular weight (calculated as polystyrene) $M_N$ = 2,480 was obtained.

The polyester resin obtained was designated as P-5.

Synthesis Example 6

Synthesis Example 1 was repeated except that the 2,382 parts of diethylene glycol was replaced with 5,800 parts of 1,4-cyclohexanedil, the 4,037 parts of cyclohexane dicarboxylic acid was replaced with 8,760 parts of adipic acid, and 0.1 part of tetrabutyltitanate was used.

Thus, polyester showing an acid value (KOH mg/g) of 91 was obtained.

The polyester resin obtained was designated as P-6.

Synthesis Example 7

(Synthesis of an alicyclic epoxy resin having ether bonds and three kinds of substituents)

134 g (1 mole) of trimethylolpropane and 186 g (15 moles) of 4-vinylcyclohexene-1-oxide were charged into a reactor, and 798 g of ethyl acetate solution containing 5% of $BF_3$ etherate was added dropwise while maintaining a temperature of 50 °C for 4 hours.

After adding dropwise, from an analysis with gas chromatography, it was confirmed that trimethylolpropane and 4-vinylcyclohexene-1-oxide almost disappeared.

Ethyl acetate was added into the crude solution, and was washed sufficiently with pure water to obtain 1,990 g of polyether compound.

The inversion ratio of 4-vinylcyclohexene-1-oxide was measured with gas chromatography analysis.

A crude solution obtained by the above reaction was washed with water, and the organic part was concentrated to obtain a viscous crude solution.

When an infrared ray absorption spectrum of the viscous product was compared with those of the raw material, absorption peaks of epoxy groups of 810 and 1,270 $cm^{-1}$ disappeared, and absorption peaks of ether groups of 1,080 and 1,150 $cm^{-1}$ were formed, and absorption peaks of vinyl groups of 1,640 $cm^{-1}$, 1,820 $cm^{-1}$ were retained.

From analysis with gas chromatograph and NMR, it was confirmed that the structure of the product was represented by the following formula:

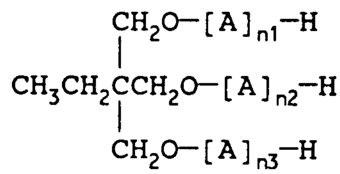

wherein A represents the following formula, and n1, n2, n3 = average 5

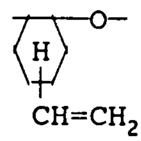

500 g of the compound obtained by the above reaction was dissolved into 250 g of ethyl acetate.

The ethyl acetate solution containing 286 g (molar ratio of peracetic acid to vinyl groups is 1.0) of peracetic acid was added dropwise into a reactor, for 4 hours keeping at the temperature of 50 °C.

And the solution was additionally aged while maintaining a temperature of 50 °C for 4 hours after adding peracetic acid.

Ethyl acetate was additionally added into the crude reaction solution and the solution was washed with distilled water; then the organic part the solution was concentrated to obtain a viscous liquid.

This viscous liquid compound had oxirane oxygen group of 8.77 wt.%.

When an analysis of the infrared absorption spectrum was carried out, an absorption peak of epoxy groups of 1,250 $cm^{-1}$ was observed.

An absorption peak of vinyl groups of 1,640 $cm^{-1}$ was retained, an absorption peak of -OH groups of 3,400 $cm^{-1}$, and an absorption peak of -CO-O- groups of 1,730 $cm^{-1}$ were observed, and from an analysis with NMR, it was confirmed that a chemical structure of the product was represented by general formula (I) ($R^1$: trimethylolpropane residual group, n1, n2, n3 = average 5, wherein a part of the substituents were groups in which acetic acid were added to epoxy group).

From above-described analysis and an analysis with NMR, it was confirmed that the structure of the product was represented by the formula

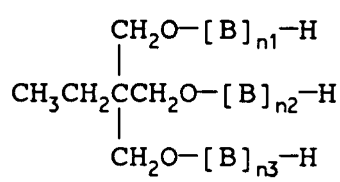

wherein B represents a mixture of oxycyclohexane structure having the following substituents, respectively, and n1, n2, n3 = average 5

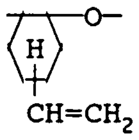

(vinyl group)

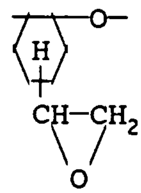

(epoxy group)

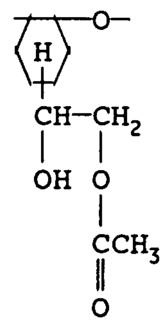

(ester group)

Also, the vinyl group/epoxy group/ ester group molar ratio was 8/83/7.

The epoxy resin obtained was designated as E-1.

Synthesis Example 8

58 g (1.0 mole) of allyl alcohol and 868 g (7 moles) of 4-vinylcyclohexene-1-oxide and 4.7 g of $BF_3$ etherate as a catalyst were mixed and allowed to react while maintaining a temperature of 60 °C for 4 hours.

Ethyl acetate was additionally added into the crude reaction solution, and was sufficiently washed with distilled water.

When an analysis was carried out as in Synthesis Example 7, it was confirmed that the structure of the product was represented by the formula

$CH_2 = CHCH_2 0\text{-}[A]_n\text{-}H$ (n = average 7)

in which A is the same as in Synthesis Example 7.

Ethyl acetate solution containing 429 g of the resulting compound was charged and ethyl acetate solution containing 395 g of peracetic acid was added dropwise into the solution while maintaining a temperature of 40 °C in the course of for 2 hours, and was additionally aged while maintaining a temperature of 40 °C for 6 hours after dropwise addition of peracetic acid solution.

Ethyl acetate was added into the crude reaction solution and the solution was washed with aqueous alkali solution containing 416 g of sodium carbonate, followed by washing with distilled water; then a viscous transparent liquid was obtained by rectification of the ethyl acetate part.

When an analysis was carried out as in Synthesis Example 7, it was confirmed that the structure of the product was represented by the formula

$CH_2 = CHCH_2 0\text{-}[B]_n\text{-}H$ (n = average 7)

in which B is the same as in Synthesis Example 7.

The epoxy resin obtained was designated as E-2.

Synthesis Example 9

32 g (1.0 mole) of methanol and 869.3 g (7 moles) of 4-vinylcyclohexene-1-oxide and 4.5 g (0.5 mole) of $BF_3$ etherate as a catalyst were mixed, and reaction carried out while maintaining a reaction temperature of 60 °C.

Ethyl acetate solution containing 555.6 g of the compound obtained by Synthesis Example 1 was put into a reactor, and ethyl acetate solution containing 319.2 g of peracetic acid was added dropwise into the solution while maintaining a temperature of 50 °C for 5 hours, and was additionally aged while maintaining a temperature of 50 °C for 3 hours after dropwise addition of peracetic acid.

Ethyl acetate was additionally added into the crude reaction solution, and was sufficiently washed with distilled water, and a viscous liquid was obtained by rectification of the organic part.

From the above results and an analysis with NMR, it was confirmed that the partial structures of compound were represented by the formula

$CH_3O-[A]_n-H$

in which A is the by same as in Synthesis Example 7.

Ethyl acetate solution containing 858 g of the compound obtained above reaction was put into a reactor, and ethyl acetate solution containing 790 g of peracetic acid was added dropwise into the solution while maintaining a temperature of 40 ° C in the course of 4 hours, and was additionally aged while maintaining a temperature of 40 ° C for 6 hours after dropwise addition of peracetic acid.

Ethyl acetate was additionally added into the crude reaction solution, and was sufficiently washed with aqueous solution containing 416 g of sodium carbonate, and washed sufficiently with distilled water.

A viscous transparent liquid was obtained by rectification of the ethyl acetate part.

When an analysis with an infrared ray absorption spectrum and NMR was carried out as in Example 6, it was confirmed that the structure of the product was represented by the formula

$CH_3O-[B]_n-H$

in which B is the same as in Synthesis Example 7.

The epoxy resin obtained was designated as E-3.

Examples

The resulting polyester resins (P-1 to P-3) obtained in Synthesis Examples 1 to 3 and a commercially supplied polyester resin (supplied by Japan Upica Co., Ltd.: Upicacoat GV-610; softening temperature 90 ° C, acid value 52, P-4) and the epoxy resins (E-1 to E-3) obtained in Synthesis Examples 7 to 9 and Modaflow Powder-II as a flow control agent (supplied by Monsanto Chemicals Co.) and benzoin as a deaerating agent and titanium oxide and triphenyl phosphine as a curing catalyst were mixed with a heated mixing roll at a temperature of 100 ° C, respectively in the mixing ratio of as described in Table 1, followed by crushed after cooling to obtain a powder coating composition, respectively.

Next, the resulting powder coating compositions were coated onto mild steel plates, respectively, by a fluidized bed coating process, followed by curing at a temperature of 200 ° C for a period of 30 minutes, followed by carrying out an outdoor durability test with a Sunshine Weather-O-Meter exposure for a period of 500 hours. No color changed in any samples even after exposure of 500 hours.

Comparative Examples

The examples were repeated except that the epoxy resins obtained in Synthesis Example were replaced with commercially supplied epoxy resins (supplied by Ciba-Geigy Co., Ltd.: Araldite PT810; triglycidyl isocyanurate) and the polyester resin obtained in Synthesis Examples were mixed in the mixing ratio as shown in Table 1.

The mixing ratio and the results obtained are shown in Table 1.

All comparative samples exhibited slight yellowing after exposure of 500 hours.

Table 1

| | Examples 1 | 2 | 3 | 4 | 5 | 6 | 7 | 8 | Comparative Examples 1 | 2 |
|---|---|---|---|---|---|---|---|---|---|---|
| polyester resin (parts) | P-1 94 | P-2 93 | P-3 90 | P-4 84 | P-5 82 | P-6 77 | P-7 86 | P-7 86 | P-7 91 | P-3 91 |
| epoxy resin (parts) | E-1 6 | E-2 7 | E-3 10 | E-2 16 | E-2 18 | E-1 23 | E-1 14 | E-1 14 | - | - |
| Araldite PT810* | - | - | - | - | - | - | - | - | 9 | 9 |
| triphenyl phosphine (parts) | 0.4 | 0.4 | 0.4 | 0.4 | 0.4 | 0.4 | - | 0.4 | - | - |
| Modaflow Powder-II (parts) | 1 | 1 | 1 | 1 | 1 | 1 | 1 | 1 | 1 | 1 |
| benzoin (parts) | 50 | 50 | 50 | 50 | 50 | 50 | 0.2 | 0.2 | 0.2 | 0.2 |
| titanium oxide (parts) | 50 | 50 | 50 | 50 | 50 | 50 | 50 | 50 | 50 | 50 |
| gelation time (second/180°C) | 86 | 74 | 52 | 32 | 29 | 22 | 124 | 37 | 56 | 43 |
| outdoor durability (500 hours) | no change | | | | | | | | slightly yellowing | slightly yellowing |

Note 1: Mixing ratio is based on parts by weight respectively
2: *triglycidyl isocyanurate

While the invention has been described in detail and with reference to specific embodiments thereof, it will be apparent to one skilled in the art that various changes and modifications can be made therein without departing from the spirit and scope thereof.

## Claims

1. A powder composition for coatings, which comprises a mixture consisting essentially of:
   (a) a carboxyl terminated polyester resin having at least 2 carboxylic groups per molecule; and
   (b) an alicyclic epoxy resin represented by formula (I) :

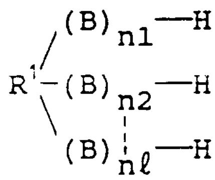

(I)

in which $R^1$ represents a residual group of an organic compound having ℓ active hydrogen atoms; n1 through nℓ each represents 0 or an interger of from 1 to 100, the sum of the integers represented by n1 through nℓ is from 1 to 100, and ℓ represents an integer of from 1 to 100, and B represents an oxycyclohexane unit having a substituent X:

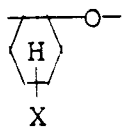

wherein the substituent X represents a

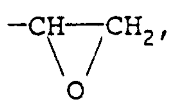

-CH = CH2, and

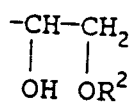

group wherein $R^2$ represents a hydrogen atom, an alkyl group, an alkyl group, an alkyl carbonyl group, or an aryl carbonyl group, provided that the epoxy resin represented by formula (I) contains at least one

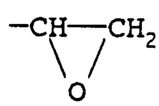

group.

2. A powder composition for coating as set forth in claim 1, wherein the mixing ratio of functional epoxy groups to carboxyl groups is in the range of 0.5/1 to 1.5/1 on the chemical equivalent basis.

3. A powder composition for coating as set forth in claims 1 and 2, wherein the acid value of the carboxyl terminated polyester resin having at least 2 carboxylic groups in a molecule is in the range of 15 to 100 and preferably the polyester resin is solid at room temperature with a glass transition temperature in the range of 40 to 80 ° C.

**4.** A powder composition for coatings as set forth in claim 1, wherein $R^1$ is a residual group of trimethylolpropane.

**5.** A powder composition for coatings as set forth in claim 1, wherein the sum of n1 through $n\ell$ has an average value of 15.

**6.** A powder composition for coatings as set forth in claim 1, wherein $R^1$ is a residual group of methanol.

**7.** A powder composition for coatings as set forth in claim 1, wherein $R^1$ is a residual group of allyl alcohol.

**8.** A powder composition for coatings as set froth in claim 1, wherein the sum of n1 through $n\ell$ has an average value of 7.

**9.** A powder composition for coatings as set forth in claim 1, wherein said composition additionally includes (c) a curing catalyst.

**10.** A powder composition for coatings as set forth in claim 9, wherein said curing catalyst is present in an amount of from 0.1 to 5%, based on the weight of the starting materials forming the mixture.

**11.** Use of a powder composition as set forth in any of the preceeding claims, as coating material on substrates.

**Patentansprüche**

**1.** Pulverzusammensetzung für Beschichtungen, welche eine Mischung umfaßt, im wesentlichen bestehend aus:

(a) einem Polyesterharz mit Carboxylendgruppen mit zumindest 2 Carboxylgruppen pro Molekül; und

(b) einem alicyclischen Epoxyharz der Formel (I):

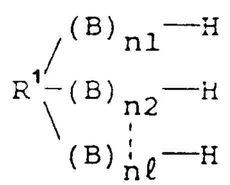

(I),

worin $R^1$ eine verbleibende Gruppe einer organischen Verbindung mit $\ell$ aktiven Wasserstoffatomen bedeutet; n1 bis $n\ell$ jeweils Null oder eine ganze Zahl von 1 bis 100 sind, wobei die Summe der durch n1 bis $n\ell$ dargestellten ganzen Zahlen 1 bis 100 beträgt, und $\ell$ eine ganze Zahl von 1 bis 100 ist, und B eine Oxycyclohexan-Einheit mit einem Substituenten X:

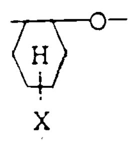

darstellt, wobei der Substituent X eine

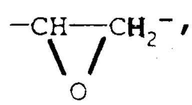

$-CH=CH_2-$ und

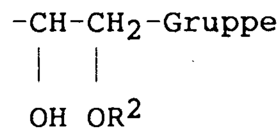

bedeutet, worin $R^2$ ein Wasserstoffatom, eine Alkylgruppe, eine Alkylcarbonylgruppe oder eine Arylcarbonylgruppe ist, mit der Maßgabe, daß das Epoxyharz der Formel (I) zumindest eine

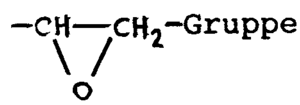

enthält.

2. Pulverzusammensetzung für Beschichtungen nach Anspruch 1, bei welcher das Mischverhältnis funktioneller Epoxygruppen zu Carboxylgruppen im Bereich von 0,5/1 bis 1,5/1 auf Basis chemischer Äquivalente liegt.

3. Pulverzusammensetzung für Beschichtungen nach Anspruch 1 und 2, bei welcher die Säurezahl des Polyesterharzes mit Carboxylendgruppen mit zumindest zwei Carboxylgruppen in einem Molekül im Bereich von 15 bis 100 liegt, und das Polyesterharz vorzugsweise mit einer Glasübergangstemperatur im Bereich von 40 bis 80 °C bei Raumtemperatur fest ist.

4. Pulverzusammensetzung für Beschichtungen nach Anspruch 1, bei welcher $R^1$ eine verbleibende Gruppe von Trimethylolpropan ist.

5. Pulverzusammensetzung für Beschichtungen nach Anspruch 1, bei welcher die Summe von n1 bis $n\ell$ einen Mittelwert von 15 hat.

6. Pulverzusammensetzung für Beschichtungen nach Anspruch 1, bei welcher $R^1$ eine verbleibende Gruppe von Methanol ist.

7. Pulverzusammensetzung für Beschichtungen nach Anspruch 1, bei welcher $R^1$ eine verbleibende Gruppe von Allylalkohol ist.

8. Pulverzusammensetzung für Beschichtungen nach Anspruch 1, bei welcher die Summe von n1 bis $n\ell$ einen Mittelwert von 7 hat.

9. Pulverzusammensetzung für Beschichtungen nach Anspruch 1, wobei die Zusammensetzung zusätzlich (c) einen Aushärtungskatalysator enthält.

10. Pulverzusammensetzung für Beschichtungen nach Anspruch 9, bei welcher der Aushärtungskatalysator in einer Menge von 0,1 bis 5 %, bezogen auf das Gewicht der die Mischung bildenden Ausgangsmaterialien, vorliegt.

11. Verwendung einer Pulverzusammensetzung nach einem der vorhergehenden Ansprüche, als Beschichtungsmaterial auf Substraten.

## Revendications

1. Composition pulvérulente pour revêtements qui comprend un mélange consistant essentiellement en :

(a) une résine de polyester à extrémités carboxylées ayant au moins deux groupes carboxyles par molécule, et
(b) une résine époxy alicyclique représentée par la formule (I):

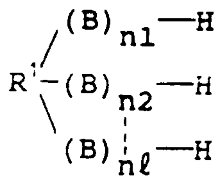

(I)

dans laquelle $R^1$ représente un groupe résiduel d'un composé organique ayant ℓ atomes d'hydrogène actifs, n1 à nℓ représentent chacun 0 ou un entier de 1 à 100, la somme des entiers représentés par n1 à nℓ étant de 1 à 100, et ℓ représente un entier de 1 à 100, et B représente une unité d'oxycyclohexane ayant un substituant X :

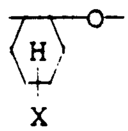

dans laquelle le substituant X représente un groupe

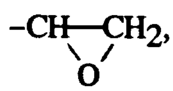

$-CH=CH_2$ ou 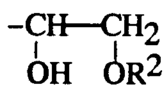

où $R^2$ représente un atome d'hydrogène, un groupe alkyle, un groupe alkylcarbonyle ou un groupe arylcarbonyle, à condition que la résine époxy représentée par la formule (I) contienne au moins un groupe

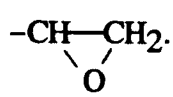

**2.** Composition pulvérulente pour revêtements selon la revendication 1, dans laquelle le rapport de mélange des groupes époxy fonctionnels aux groupes carboxyles est situé dans la plage de 0,5/1 à 1,5/1 en termes d'équivalents chimiques.

**3.** Composition pulvérulente pour revêtements selon les revendications 1 et 2, dans laquelle l'indice d'acide de la résine de polyester à extrémités carboxylées ayant au moins deux groupes carboxyles par molécule est compris dans la plage de 15 à 100, et de préférence la résine de polyester est solide à la température ambiante et a une température de transition vitreuse située dans la plage de 40 à 80 ° C.

4. Composition pulvérulente pour revêtements selon la revendication 1, dans laquelle $R^1$ est un groupe résiduel de triméthylolpropane.

5. Composition pulvérulente pour revêtements selon la revendication 1, dans laquelle la somme de n1 à $n\ell$ a une valeur moyenne de 15.

6. Composition pulvérulente pour revêtements selon la revendication 1, dans laquelle $R^1$ est un groupe résiduel de méthanol.

7. Composition pulvérulente pour revêtements selon la revendication 1, dans laquelle $R^1$ est un groupe résiduel d'alcool allylique.

8. Composition pulvérulente pour revêtements selon la revendication 1, dans laquelle la somme de n1 à $n\ell$ a une valeur moyenne de 7.

9. Composition pulvérulente pour revêtements selon la revendication 1, dans laquelle ladite composition comprend en outre (c) un catalyseur de durcissement.

10. Composition pulvérulente pour revêtements selon la revendication 9, dans laquelle ledit catalyseur de durcissement est présent en une quantité de 0,1 à 5 % par rapport au poids des produits de départ formant le mélange.

11. Utilisation d'une composition pulvérulente selon l'une quelconque des revendications précédentes comme matériau de revêtement sur des substrats.